Europäisches Patentamt

European Patent Office

Office européen des brevets

(11) EP 0 884 866 A1

(19)

(12) **EUROPEAN PATENT APPLICATION**
published in accordance with Art. 158(3) EPC

(43) Date of publication:
16.12.1998 Bulletin 1998/51

(51) Int. Cl.$^6$: **H04B 10/18**

(21) Application number: 96906000.3

(86) International application number:
PCT/JP96/00622

(22) Date of filing: 13.03.1996

(87) International publication number:
WO 97/34379 (18.09.1997 Gazette 1997/40)

(84) Designated Contracting States:
DE FR GB

(71) Applicant: HITACHI, LTD.
Chiyoda-ku, Tokyo 100 (JP)

(72) Inventors:
• KIKUCHI, Nobuhiko
Nerima-ku, Tokyo 176 (JP)

• SASAKI, Sinya
Higashimurayama-shi, Tokyo 189 (JP)

(74) Representative:
Strehl Schübel-Hopf & Partner
Maximilianstrasse 54
80538 München (DE)

(54) **OPTICAL COMMUNICATION SYSTEM**

(57) Disclosed is an optical transmission system using an optical fiber grating (FBG) for dispersion compensation.

To this end, a narrow-band dispersion compensation FBG is disposed in a receiver. The wavelength of a transmission light source 101 is stabilized by a transmission-side FBG 120 and, at the same time, dispersion compensation is performed. Also in the receiving side, dispersion compensation is performed by the FBG 121.

Dispersion compensation by the receiving-side FBG 120 can suppress deterioration caused by a self-phase modulating effect. In addition, the required wavelength bandwidth for the receiving-side FBG 121 can be reduced.

FIG. 1

EP 0 884 866 A1

## Description

### TECHNICAL FIELD

The present invention relates to an optical transmission system using optical fiber for transmitting optical information.

### BACKGROUND ART

In the field of ultra-high speed optical communication, the phenomenon of optical fiber dispersion causes severe limitations in transmission speed and transmission distance. "Dispersion" is a phenomenon that light rays different in wavelength are transmitted in optical fiber at different speeds. Light spectra of an optical signal modulated at a high speed contain different wavelength components which reach a receiving end at different points of time because of the influence of dispersion. It is known that the waveform of light after transmission consequently brings large waveform distortion. A technique of dispersion compensation has been discussed to avoid the influence of dispersion. Dispersion compensation is a method in which an optical device having dispersing characteristic reverse to that of optical fiber used in a transmission line is disposed in a light transmitter or receiver to thereby cancel the dispersing characteristic of optical fiber to suppress the waveform of light.

A method using dispersion compensation fiber having dispersion of a sign reverse to a transmission line is known as a dispersion compensation method. Besides, a method using an optical interferometer, an optical circuit and a grating, and so on, have been discussed. Above all, application of an optical fiber grating to dispersion compensation has been discussed in recent years.

The optical fiber grating is such that ultraviolet rays are radiated onto optical fiber so that a small periodic refracting index change of the order of the wavelength of light occurs in the inside of optical fiber. Such optical fiber can be used in a reflection type optical filter, or the like, because the optical fiber has characteristic of reflecting light of a wavelength determined by the period of the grating. Furthermore, the optical fiber grating is noticed because the optical fiber grating is simple in structure so as to be able to be produced easily and the reflecting characteristic can be set considerably freely.

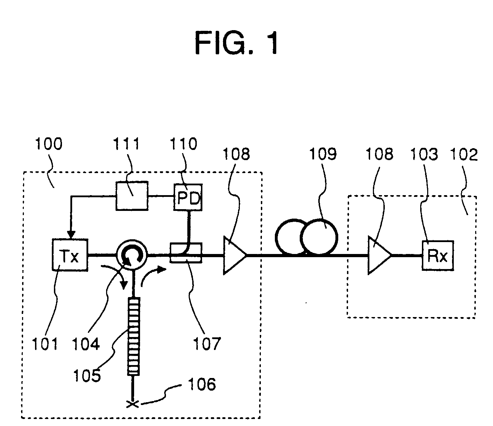

In the case of use of an optical fiber grating for dispersion compensation, a chirped grating, which is designed so that the interval of the grating changes gradually in the longitudinal direction of optical fiber in order to obtain constant dispersing characteristic in a wide wavelength range, is effective. Proceedings of Optical Fiber Conference (OFC'95), 1995, post deadline paper, PD27 (literature 1) is an example of use of such a chirped grating for dispersion compensation. In this example, a uniform optical fiber grating is bent physically to change the interval of the grating to thereby achieve the chirped grating. On the other hand, in Proceedings of 21st European Conference on Optical Communication (ECOC'95), 1995, paper We.B.1.7, pp 585-587 (literature 2), a temperature gradient is generated in the longitudinal direction of a uniform optical fiber grating to thereby produce a chirped grating for dispersion compensation transmission. Fig. 1 shows an example of a conventional optical transmission system using an optical fiber grating.

A light transmitter 100 and a light receiver 102 are connected to each other through an optical fiber transmission line 109. In the case of repeaterless transmission, the optical fiber transmission line 109 has a length of the order of tens of kilometers. In the case of repeater transmission using optical repeaters, the optical fiber transmission line 109 has a length of about 10000 km at the maximum. As the kind of optical fiber, general dispersion fiber or dispersion shifted fiber is used. In the case of general dispersion fiber, the quantity of dispersion is 17 ps/nm/km and the total quantity of dispersion is from the order of hundreds of ps/nm to the order of thousands of ps/nm when the transmission distance is of the order of tens of kilometers. In a transmission system of 10 Gbit/s, an optical fiber grating 105 is disposed in the light transmitter 100 so as to be used for dispersion compensation because the dispersion tolerance of an optical signal is, for example, only about ±500 ps/nm.

A transmission light source 101 outputs an optical signal modulated by an information signal. The optical signal is led to the optical fiber grating 105 through a optical circulator 104. The optical circulator 104 is a kind of optically non-reciprocating circuit and is used for efficiently taking out an optical signal reflected by the optical fiber grating. Because the optical fiber grating 105 is set so that the center wavelength of the reflection band of the optical fiber grating 105 coincides with the wavelength of the optical signal, the optical signal is reflected by the optical fiber grating so that dispersion compensation is given to the optical fiber by the dispersing characteristic of the grating. Further, an opposite end surface of the grating is generally treated as a non-reflection terminal 106, or the like, so that reflected light does not occur in the end surface. The signal light reflected by the grating goes back to the optical circulator 104 again and is sent out to the optical fiber transmission line 109. An optical amplifier 108 is inserted in the optical fiber transmission line 109 for compensating the loss in the optical fiber transmission line 109. The optical signal is converted into an electric signal by a light receptor 103 in the light receiver 102.

If the quantity of dispersion in the optical fiber grating 105 is set to substantially cancel the quantity of dispersion in the optical fiber transmission line 109, the quantity of dispersion in a range of from the transmission light source 101 to the light receptor 103 becomes zero so that the deterioration of the waveform of light after transmission can be compensated. In the optical fiber grating, however, the relation of trade-off generally occurs between the quantity D of dispersion and the wavelength bandwidth $\Delta\lambda$ when the grating length L is constant. That is, the relation is expressed by the product $D \cdot \Delta\lambda = C \cdot L$ (in which C is a constant) of the two. It is apparent from the relation that the wavelength bandwidth decreases as the quantity of dispersion increases. In most cases, the grating length is limited to the order of several centimeters in accordance with a producing method and by uniformity of the grating, or the like, so that the quantity of dispersion or the wavelength bandwidth is consequently limited.

For example, in the case of a fiber grating of 45 mm described in the literature 2, the wavelength band is 0.3 nm when the quantity of dispersion is 1000 ps/nm. There is, however, a possibility that the wavelength of a light source used for light transmission may change by about 0.1 nm in a short time and by several nanometers in a long time. Further, there is a possibility that the transmission wavelength may be out of the reflection band of the grating and that the center wavelength of the grating may vary in accordance with the temperature change, or the like. Accordingly, there arises a problem that long-term stable transmission is difficult even in the case where the transmission wavelength is made to coincide with the grating wavelength.

In the prior art, it is therefore necessary that a narrow-band optical fiber grating of a large dispersion quantity is disposed in the transmitter and the wavelength of a transmission light source is made to coincide with the center wavelength of the optical fiber grating when the large-dispersion-quantity narrow-band optical fiber grating is used. Fig. 1 shows an example of wavelength stabilization applied as means for wavelength matching. A light coupler 107 divides a part of the reflected light of the optical fiber grating 105 into a photodiode 110 in which the reflected light is converted into an electric signal. A wavelength stabilizing circuit 111 controls the transmission wavelength of the transmission light source 101 so that the reflected light is maximized. Accordingly, the center wavelength of the optical fiber grating can be always made to coincide with the wavelength of the optical signal.

The aforementioned configuration in which the optical fiber grating 105 is disposed in the transmitter 101, however, has a problem that waveform distortion caused by a self-phase modulating (SPM) effect generated in the optical fiber transmission line 109 cannot be compensated. The self-phase modulating effect is one of non-linear effects in optical fiber and brings a phenomenon that phase modulation (frequency chirping) occurs in an optical signal to be transmitted when the intensity of the optical signal is large. The self-phase modulating effect interacts with optical fiber dispersion to generate large waveform distortion in the waveform of the transmission optical signal to thereby deteriorate transmission characteristic. When the optical fiber grating 105 is disposed in the light transmitter 100 as described above, dispersion compensation is not given to frequency chirping generated in the optical fiber transmission line 109 but the frequency chirping interacts with transmission fiber dispersion. Accordingly, this causes large waveform deterioration as a serious problem.

When the optical fiber grating 105 for dispersion compensation is contrariwise disposed in the receiver 102, waveform deterioration caused by the self-phase modulating effect can be compensated. In this case, however, the center wavelength of the transmission light source 101 and the center wavelength of the optical fiber grating 105 are hardly made to coincide with each other because the transmission light source 101 and the optical fiber grating 105 are arranged so as to be separated at a distance of the order of tens of kilometers through the optical fiber transmission line 109. Coincidence between the center wavelengths is very difficult because of variations in the wavelength of a semiconductor laser used as a transmission light source, wavelength changes caused by deterioration, change with the passage of time, or the like, error in the measurement of the wavelength, etc. Even in the case where control is performed to stabilize the wavelength of the transmission light source 101 and the center wavelength of the optical fiber grating, there arise problems as follows: the control loop length is not shorter than the order of tens of kilometers to make control difficult; a line for feeding a control signal back to the transmission side is required to be secured separately; the transmitter is difficult to be singly operated to make an operating test difficult; etc. There arise further various problems as follows: a control signal from the receiver side is required to be fed back to the transmitter side; the system is difficult to be started up; etc.

There is a possibility that the aforementioned problems may occur not only in the optical fiber grating but also in the case where narrow-band dispersion compensation is performed. For example, in most cases, the band of a dispersion compensator using an optical circuit and an optical interferometer is in a range of from the order of tens of GHz to the order of hundreds of GHz, so that the same problems arise therein. Further, also in the case where dispersion compensation fiber, or the like, is used as a dispersion compensation device, the aforementioned problems in the wavelength band may occur. The dispersion compensation fiber generally has a large wavelength band not shorter than the order of hundreds of nanometers but the wavelength band capable of being used for effective dispersion compensation transmission is limited to a part of the large wavelength band because the quantity of dispersion in the transmission line fiber and the dispersion compensation fiber, the loss in such fibers and the gain characteristic of the optical amplifier depend on the wavelength. For example, the value of dispersion in transmission optical fiber has wavelength dependency of 1.0 ps/nm/nm/km, so that the available wavelength range is limited to ±5 nm on the assumption of a transmission distance of 100 km at 10 Gbit/s (dispersion tolerance is, for example, ±500 ps/nm). This becomes a large problem in multi-wavelength transmission, or the like, in which a plurality of optical signals different in wavelength are used as transmission signals. Furthermore, when the transmission distance increases more greatly, there is a possibility that the same problems arise in single-wavelength transmission.

An object of the present invention is to provide a practical optical transmission system using a narrowband dispersion compensation device such as an optical fiber grating, or the like, for dispersion compensation, in which the aforementioned problems are solved.

DISCLOSURE OF THE INVENTION

The foregoing object is solved by arrangement of a light wavelength standard device in a light transmitter to make the transmission wavelength of the light transmitter coincident with the wavelength standard device and by arrangement of a dispersion compensation device in optical repeaters or in a light receiver.

Particularly when a dispersion compensation device is disposed also in the light transmitter or dispersing characteristic is given to the light wavelength standard device, the effect of the present invention can be increased if optimum dispersion compensation is performed with respect to the frequency chirping and the self-phase modulating effect of the light source both in the transmitting side and in the receiving side. Particularly in optical transmission at a high speed not higher than 10 Gbit/s, it is particularly effective that the quantity of distributed compensation in the transmission side is set to be not smaller than 50 ps/nm.

Further, in the present invention, it is particularly effective that an optical fiber grating is used as the light wavelength standard device disposed in the light transmitter and/or an optical fiber grating is used as the dispersion compensation device disposed in the light receiver or in the optical repeaters. Further, the invention is effective also in the case where distributed compensation fiber is used as the dispersion compensation device.

According to a preferred embodiment of the present invention, the wavelength band of the dispersion compensation device disposed in the light receiver or in the optical repeaters is set to be not shorter than a half of the sum of (the quantity of the change of the wavelength of the transmission light) and (the quantity of the change of the center wavelength of the dispersion compensation device) to thereby suppress the influence of the wavelength changes in the wavelength stabilizing device and the dispersion compensation device.

Further, particularly in the case where an optical fiber grating is used, the object of the present invention can be achieved effectively if the wavelength band in the optical fiber grating is set to be 0.2 nm or more larger than the wavelength bandwidth in the transmission-side wavelength standard device.

Further, when temperature stabilization is applied to either the light wavelength standard device disposed in the transmitter or the dispersion compensation device disposed in the light receiver or in the optical repeaters or applied to the two devices, the object of the present invention can be achieved effectively.

Further, particularly in the case where an optical fiber grating is used for dispersion compensation, a plurality of optical fiber gratings having identical center wavelengths may be used so as to be connected multistageously so that the band can be widened compared with the case of one stage. Accordingly, the object of the present invention can be achieved easily.

Further, in the case of multi-wavelength transmission, a plurality of light wavelength standard devices corresponding to transmission wavelengths are disposed in the light transmitter and one dispersion compensation device is disposed in the light receiver or a plurality of dispersion compensation devices are disposed in the light receiver so that the aforementioned object can be achieved. The same rule is applied to the case where optical fiber gratings are connected multistageously.

BRIEF DESCRIPTION OF THE DRAWINGS

Fig. 1 is a configuration diagram of a conventional light transmission system using an optical fiber grating;
Fig. 2 is a configuration diagram showing a first embodiment of the present invention;
Fig. 3 is a view showing the reflection band of the optical fiber grating in the first embodiment of the present invention;
Fig. 4 is a view, related to the first embodiment of the present invention, showing the change of the reflection band of the optical fiber grating caused by the temperature change;
Fig. 5 is a configuration diagram showing a second embodiment of the present invention;
Fig. 6 is a configuration diagram showing a third embodiment of the present invention;
Fig. 7 is a configuration diagram showing a fourth embodiment of the present invention;
Fig. 8 is a configuration diagram showing a fifth embodiment of the present invention; Fig. 9 is a view showing the reflection band of
the optical fiber grating in the fifth embodiment of the present invention;
Fig. 10 is a configuration diagram showing a sixth embodiment of the present invention;
Fig. 11 is a view showing the reflection band of the optical fiber grating in the sixth embodiment of the present invention;
Fig. 12 is a configuration diagram showing a seventh embodiment of the present invention;

Fig. 13 is a configuration diagram showing an eighth embodiment of the present invention;

Fig. 14 is a configuration diagram showing a ninth embodiment of the present invention;

Fig. 15 is a configuration diagram showing a tenth embodiment of the present invention;

Fig. 16 is a configuration diagram showing an eleventh embodiment of the present invention;

Fig. 17 is a configuration diagram showing a twelfth embodiment of the present invention.

## BEST MODE FOR CARRYING OUT THE INVENTION

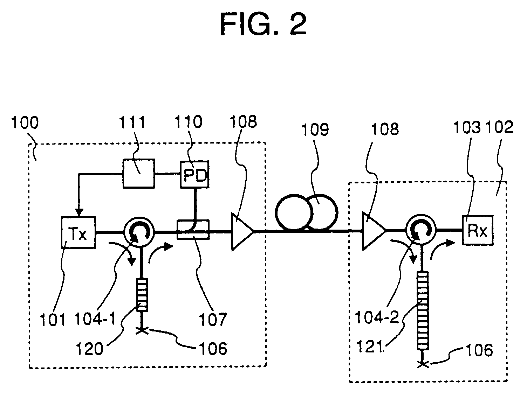

Fig. 2 is a configuration diagram showing a first embodiment of the present invention. A transmission light source 101, a optical circulator 104-1 and a transmission-side optical fiber grating 120 are disposed in a light transmitter 100. The transmission light source 101 sends out signal light modulated by an information signal. The optical signal is led to the transmission-side optical fiber grating 120 through the optical circulator 104-1. A part of the optical signal reflected by the grating is separated to a photodiode 110 by a light coupler 107, and the residual part of the optical signal is sent out, as transmission light, to an optical fiber transmission line 109 after amplified by a optical amplifier 108. Standard single mode fiber, dispersion shifted fiber, or the like, is usually used as the optical fiber transmission line. A wavelength stabilizing circuit 111 controls the wavelength of the transmission light source 101, for example, to maximize the output signal from the photodiode 110 and controls the wavelength of signal light so that the wavelength of the signal light always coincides with the center wavelength of the transmission-side optical fiber grating 120.

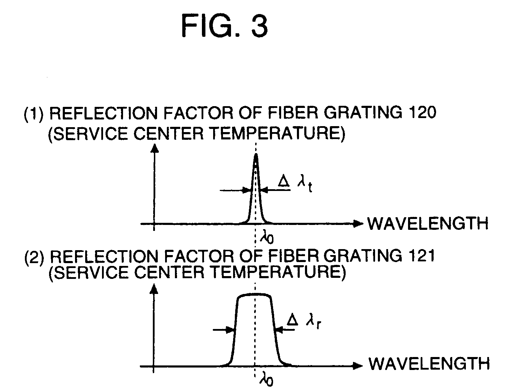

A light receiver 102 is connected to an output end of the optical fiber transmission line 109. An optical amplifier 108 for compensating the loss in optical fiber, an optical circulator 104-2 and a reception-side optical fiber grating 121 are disposed in the receiver. The center wavelength of the reception-side optical fiber grating 121 is set so as to coincide with the center wavelength of the transmission-side optical fiber grating 120 as shown in Fig. 3, for example, at a service center temperature. When, for example, a chirped grating having a length of 10 cm is used as the reception-side optical fiber grating 121 and the quantity of dispersion is set to 500 ps/nm (equivalent to the quantity of dispersion in standard single mode fiber with about 30 km), the wavelength band $\Delta\lambda r$ is about 1.0 nm.

Besides the optical fiber grating, any device such as a device using dispersion compensation fiber, a device using a Fabry-Perot light interferometer, a device using a Mach-Zender optical interferometer, or the like, may be used as the reception-side distributed compensation device so long as the device has dispersion of a sign reverse to the transmission line. In the present invention, wavelength stabilization is performed in the transmission side, so that the band required of these reception-side dispersion compensation devices is narrow. Accordingly, the present invention is particularly effective when a narrow-band dispersion compensation device such as an interferometer type device, or the like, is used. Further, in multi-wavelength transmission, transmission at a long distance not shorter than the order of hundreds of kilometers, etc., the allowable band may be limited to be not larger than the order of nanometers even in the case where a wide-band device such as dispersion compensation fiber, or the like, using the gain difference between optical amplifiers, the dispersion value difference between wavelengths, etc. is used. Also in this case, the present invention is effective.

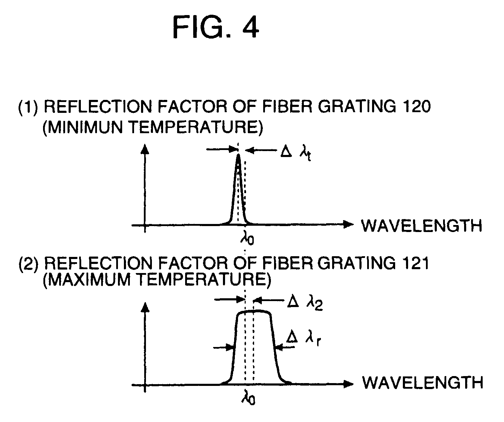

In this embodiment, the transmission wavelength and the center wavelength of the reception-side optical fiber grating can be allowed to vary if the wavelength bandwidth $\Delta\lambda t$ of the transmission-side optical fiber grating 120 is set so as to be narrower than the wavelength bandwidth $\Delta\lambda r$ of the reception-side optical fiber grating 121. In the case of an optical fiber grating, the main cause of the wavelength change is the temperature change. Fig. 4 shows the change of the reflection band of the optical fiber grating in the case where the temperature changes in the transmission side and in the reception side. Fig. 4 shows the case where the sign of temperature dependency of the center wavelength of the transmission-side optical fiber grating is the same as that of the reception-side optical fiber grating (the same rule can be applied to the case where the signs of the two are different from each other) and where the transmission wavelength is set so as to be in the reflection band of the reception-side optical fiber grating even in the case where the transmission-side and reception-side temperatures change independently. The temperature dependency of the center wavelength of the optical fiber grating is about 0.01 nm/°C. Accordingly, when, for example, the band of the transmission-side optical fiber grating is set to be 0.2 nm shorter ($\Delta\lambda t < 0.8$ nm) than that of the reception-side optical fiber grating, the transmission light can be kept accordant with the wavelength band of the reception-side optical fiber grating even in the case where the temperature of the transmitter and the temperature of the receiver change within a width of 0.2/2/0.01=10°C. Further, the allowable temperature range can be widened if the band of the transmission-side optical fiber grating is narrowed. When temperature stabilization is applied to either the transmission-side optical fiber grating or the reception-side optical fiber grating, the operating temperature range can be widened to twice ideally. When temperature stabilization is applied to both the optical fiber gratings, the operating temperature range can be improved more greatly.

A method using a heater, or the like, for always heating the optical fiber grating to a temperature not lower than the maximum operating temperature, a method using a Peltier element for stabilizing the temperature to a constant value, a method using a temperature-compensation sleeve attached for reducing the temperature coefficient, etc., have been devised as the method for stabilizing the temperature of the optical fiber grating. Any one of these methods may be used. Incidentally, in the case of a wavelength stabilizing device or dispersion compensation device used generally, the main cause of the center wavelength change is not always the temperature. For example, the center wavelength change may be caused by the change with the passage of time, or the like, that is, may be caused by the incompletion of the control method, or the like. The present method can be applied also to this case. Incidentally, because the band of the transmission-side optical fiber grating can be set to be relatively narrower than the band of the reception-side optical fiber grating, the transmission-side optical fiber grating can be achieved easily by a uniform fiber grating, or the like. Further, when a chirped grating is used, dispersing characteristic can be given to the chirped grating. In this case, in a 10 Gbit/s NRZ method in which dispersion tolerance is about 500 ps/nm, the effect of dispersion compensation cannot be obtained unless the quantity of dispersion of not smaller than 50 ps/nm as an absolute value is given to the chirped grating at a transmission speed of not higher than 10 Gbit/s. When the bit rate is improved more greatly, this value is more reduced in inverse proportion to the square of the bit rate. In such transmission-side dispersion compensation, only frequency chirping of the transmission light source can be compensated. Accordingly, there arises an advantage that the self-phase modulating effect and the frequency chirping of the transmission light source can be compensated more effectively and the configuration is simplified. Further, when an optical fiber grating is used as the reception-side dispersion compensation device, there arises an advantage that the center wavelengths can be made to coincide with each other easily in terms of production by use of the same mask both in the transmission side and in the reception side and parts can be reduced in kind.

Further, a synchronous detection circuit, or the like, can be used as the wavelength stabilizing circuit 111. In this case, in the wavelength stabilizing circuit 111, a low-frequency sine-wave signal added to a wavelength control signal is applied to the transmission light source 101 to perform controlling to make the product of the output signal of the photodiode 110 and the sine-wave signal be zero to thereby achieve maximum value control. Any other control method used for wavelength stabilization than this method can be used. For example, a method in which two optical fiber gratings different in center wavelength are disposed in the transmission side so that the intensities of light passing through the optical fiber gratings respectively are controlled to be equal to each other, can be used. As shown in this example, the transmission wavelength is not always required to coincide with the center wavelength of the transmission-side light wavelength stabilizing device, that is, stabilization may be applied to a shoulder, or the like, of reflective or transmissive characteristic.

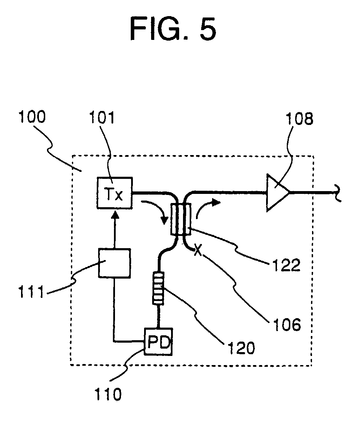

Fig. 5 shows a second embodiment of the present invention in which the optical circulator in the transmitter 100 is replaced by a light coupler. Because the transmission light passes through the light coupler twice in the process in which the transmission light is reflected from the optical fiber grating 120, the transmission light suffers a loss of not smaller than 6 dB. Accordingly, the loss increases compared with the case of use of an optical circulator but the same effect can be obtained. Further, in this embodiment, the stabilization of the wavelength of the transmission light is achieved by use of light transmitted through the transmission-side optical fiber grating 120. That is, a photodiode 110 is connected to an opposite end of the transmission-side optical fiber grating 120, and light transmitted through the transmission-side optical fiber grating 120 is controlled to be minimized to thereby achieve the stabilization of the transmission wavelength.

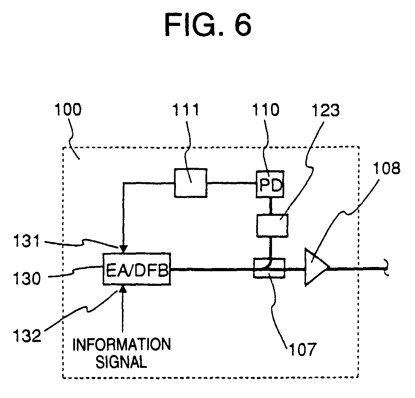

Fig. 6 shows a third embodiment of the present invention, in which an integrated light source (EA/DFB) 130 containing an absorption modulator and a semiconductor laser integrated on one and the same chip is used as the transmission light source. In this embodiment, not only an information signal is applied to an absorption modulator portion input terminal 132 of the integrated light source 130 so that intensity modulation is applied to the signal light, but also a semiconductor laser portion input terminal 131 is used for the stabilization of the wavelength. Incidentally, as an optical signal modulation method, an intensity modulation direct-detection method as shown in this embodiment is widely used in digital transmission at a speed not lower than the order of Gbit/s. However, the present invention can be used also in a coherent optical communication system, an optical time-division multiplex transmission system, or the like, using phase modulation, frequency modulation, etc. Further, the invention can be applied also to optical analog transmission, or the like. Further, not only the semiconductor laser used generally but also any other combination of a Mach-Zehnder light intensity/phase modulator, an absorption light modulator, etc. of semiconductor or LN can be used as the light source.

Further, in this embodiment, a Fabry-Perot optical filter 123 is used as the wavelength stabilizing device for stabilizing the transmission wavelength to one of peaks in the transmissive characteristic thereof. Other methods using the wavelength of an optical signal in the transmissive and reflective characteristic of a Mach-Zehnder light interferometer, or the like, are known widely, and these methods can be applied. As further methods, various methods such as a method using absorption spectra of acetylene molecules, or the like, a method using an interference light filter, a method using a light spectrum analyzer, a method for applying wavelength stabilization to a light wave synthesizer used in multi-wavelength transmission, etc., have been proposed, and these methods can be applied.

Among these wavelength standard devices, many devices are capable of having dispersion compensation characteristic in the same manner as in the optical fiber grating. Examples of the devices capable of having distributed dispersion characteristic include a reflection type Fabry-Perot interferometer, a multistage Mach-Zehnder interferometer, etc. Further, the wavelength standard device and the dispersion compensation device disposed in the transmitter may be achieved by different devices respectively. For example, the above two devices may be constituted by optical fiber gratings respectively or a dispersion compensation fiber or light interferometer may be disposed as the dispersion compensation device.

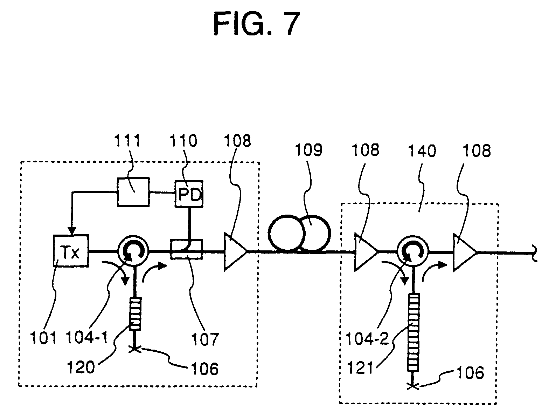

Fig. 7 shows a fourth embodiment of the present invention and shows the configuration of an optical repeater. Optical amplifiers 108, an optical circulator 104-2 and an optical fiber grating 121 are disposed in the optical repeater 140. An optical signal given from the optical fiber transmission line 109 is subjected to dispersion compensation by the optical fiber grating 121 in the same manner as in the case of a light receiver, amplified to predetermined light intensity by the light amplifier again and then outputted. The light bandwidth and center wavelength of the optical fiber grating 121 may be set in the same manner as in the case of arrangement in the light receiver in the previous embodiment. A plurality of optical repeaters described above may be disposed as occasion demands so that the transmission distance can be more elongated. An optical filter, an optical isolator, an optical amplifier, etc. may be disposed in the optical amplifier as occasion demands.

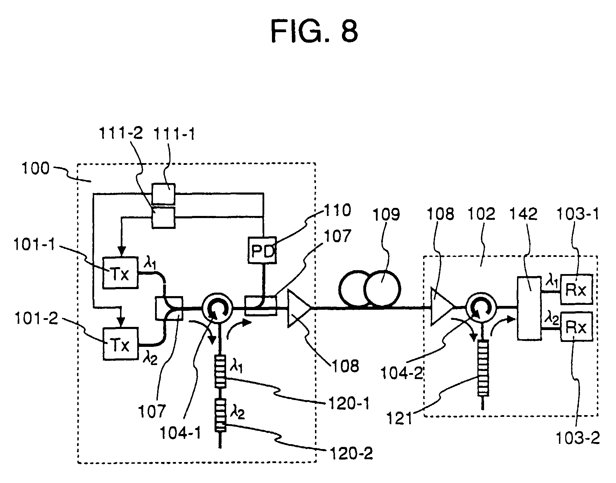

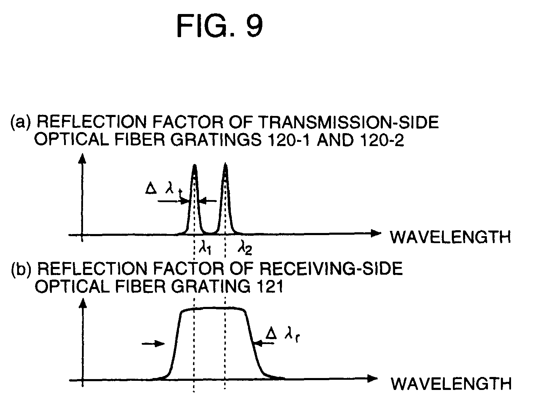

Fig. 8 shows a fifth embodiment of the present invention, in which the invention is applied to wavelength multiplexing. This embodiment shows an example of multiplexing of two wavelengths, in which two transmission light sources 101-1 (wavelength $\lambda 1$) and 101-2 (wavelength $\lambda 2$) different in wavelength are disposed in the transmitter 100. For simplification of the configuration, the optical circulator 104-1 in the transmitter 100 is used in common to the two wavelengths. Specifically, two signal light rays of wavelengths $\lambda 1$ and $\lambda 2$ are coupled by the light coupler 107 and then led to the light circulator 104-1, so that the wavelengths are reflected by the optical fiber gratings 120-1 and 120-2 respectively. Because the reflection characteristics of the two optical fiber gratings are set, with $\lambda 1$ and $\lambda 2$ as their centers, so as not to overlap each other as shown in Fig. 9(a), there is no interference relative to each other even in the case where the two gratings are series-connected on one and the same fiber. The reflected light thus obtained is converted into an electric signal by the photodiode 110 and controlled by wavelength stabilizing circuits 111-1 and 111-2 so that the quantities of reflected light are maximized. Control signals of the respective wavelengths can be separated from each other when, for example, the frequency of a low-frequency sine-wave signal used in synchronous detection is changed slightly by the wavelength stabilizing circuits 111-1 and 111-2. The quantities of dispersion in the transmission-side optical fiber gratings 121-1 and 121-2 can be set correspondingly to the wavelengths. It is a matter of course that the light circulator 140-1 is not required to be used in common to the optical wavelengths and wavelength stabilization may be performed for each wavelength in a suitable place such as a place in front of the light coupler 107.

Further, this embodiment shows the case where only one optical fiber grating 121 is disposed in the light receiver 102 so as to be used in common to two signal wavelengths. In this case, the reflection bandwidth of the optical fiber grating 121 is required to cover the bands of the two optical signals as shown in Fig. 9(b) and required to have room for the change of the wavelength of the transmission light and the change of the center wavelength of the dispersion compensation device. In this embodiment, the wavelengths are separated by a wavelength demultiplexer 142 and led to light receivers 103-1 and 103-2 respectively because two optical signals of transmission wavelengths $\lambda 1$ and $\lambda 2$ are mixed in the output signal of the optical circulator 104.

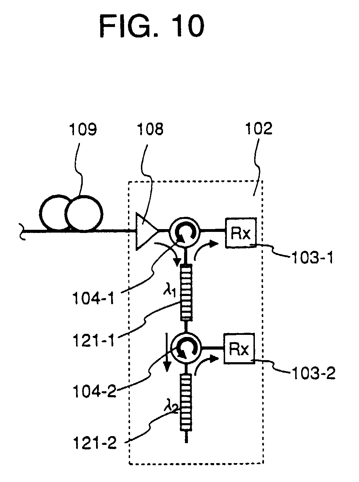

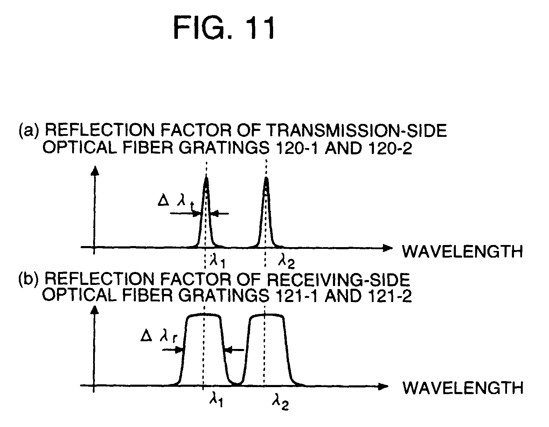

Fig. 10 shows a sixth embodiment of the present invention, in which optical fiber gratings in a light receiver 102 are used in colon to the two roles of dispersion compensation and light wavelength demultiplexing filter. The optical fiber gratings 121-1 and 121-2 are set to reflect only optical signals in neighbors of wavelengths $\lambda 1$ and $\lambda 2$ respectively as shown in Fig. 11(b). The optical signals reflected by the optical fiber gratings respectively are taken out by optical circulators 104-1 and 104-2 successively and then led to light receivers 103-1 and 103-2 respectively. In the case of such a configuration, the quantities of dispersion can be changed correspondingly to the wavelengths, and the wavelength bandwidth required for the dispersion compensation device can be narrowed. Even in the case where the number of wavelengths increases more greatly, the respective numbers of optical circulators and optical fiber gratings to be series-connected can be increased correspondingly.

An intermediate mode between the fifth embodiment and the sixth embodiment may be used for carrying out the invention. That is, a plurality of dispersion compensation devices different in center wavelength may be disposed in a light receiver so that each dispersion compensation device can cover one or more transmission wavelengths.

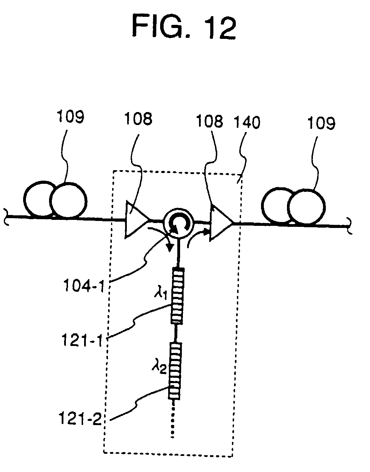

Fig. 12 shows a seventh embodiment of the present invention and shows the configuration of an optical repeater in the case where the invention is applied to multi-wavelength transmission. In this embodiment, dispersion compensation optical fiber gratings 121-1 and 121-2 having center wavelengths identical with transmission wavelengths $\lambda 1$ and $\lambda 2$ respectively are disposed in the optical repeater 140, so that transmission signals of the respective wavelengths are reflected for dispersion compensation. Like the aforementioned embodiment of the receiver, the quantities of dispersion or the wavelength bands may be set to different values correspondingly to the wavelengths or the number of optical fiber gratings to be series-connected may be increased so that the number of wavelengths can be increased. That is, there arises an advantage that extension/maintenance is performed easily because optical fiber gratings corresponding to new wavelengths can be connected through optical connectors, or the like, even in the case where the number of wavelengths in an existing transmission system is increased.

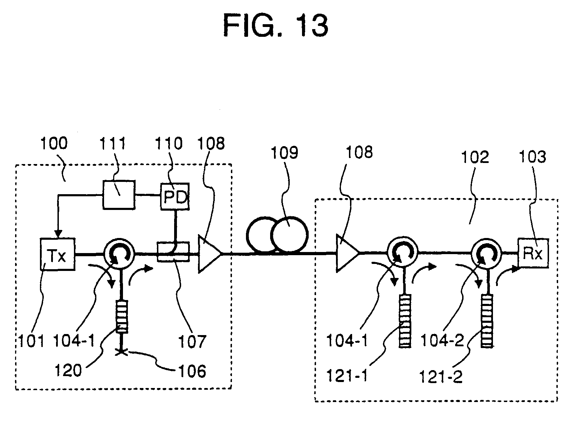

Fig. 13 shows an eighth embodiment of the present invention, in which dispersion compensation optical fiber gratings having identical center wavelengths are connected multistageously to thereby increase the quantity of dispersion compensation and reduce the band required for each optical fiber grating. After a transmission signal given to a light circulator 104-1 is reflected and subjected to dispersion compensation by an optical fiber grating 121-1, the signal is subjected to dispersion compensation again by an optical circulator 104-2 and an optical fiber grating 121-2. In the case of this configuration, there arises an effect that the optical fiber grating length is extended to twice equivalently. That is, when the total quantity of dispersion is equalized, the light bandwidth can be widened to twice. If the number of dispersion compensation fiber gratings to be connected multistageously is increased under the condition of the same configuration, the wavelength bandwidth can be widened in proportion to the number of fiber gratings to be connected multistageously. Further, the optical fiber gratings different in the quantity of dispersion may be connected multistageously for the purpose of adjusting the quantity of dispersion.

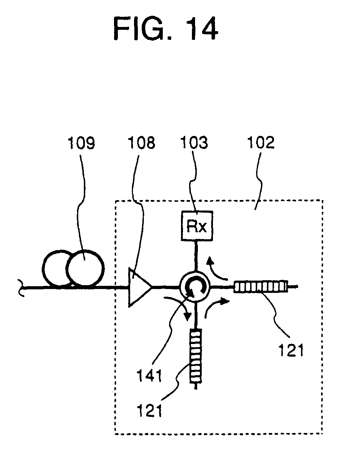

Fig. 14 shows a ninth embodiment of the present invention, in which the invention is achieved by use of a multi-port light circulator 141. In this embodiment, a received signal is given to one input port of a 4-port optical circulator, and optical fiber gratings having identical center wavelengths are disposed in two intermediate ports of the optical circulator to thereby widen the band. The configuration can be simplified by use of the multiport optical circulator.

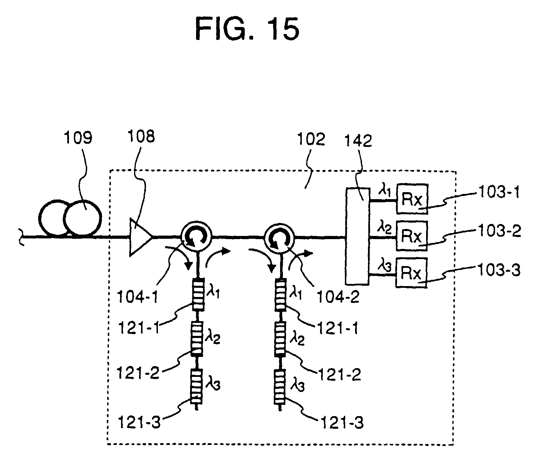

Fig. 15 shows a tenth embodiment of the present invention and shows an example of configuration in the case where dispersion compensation by multistageous optical fiber gratings is applied to multi-wavelength transmission. Fig. 15 shows the case where the number of wavelengths is three. Two-stage configuration in which optical circulators 104-1 and 104-2 are provided as first and second stages respectively is employed. Optical fiber gratings 121-1, 121-2 and 121-3 having center wavelengths corresponding to $\lambda 1$, $\lambda 2$ and $\lambda 3$ respectively are series-connected to each optical circulator. For example, the optical signal of wavelength $\lambda 2$ is reflected by the optical fiber grating 121-2 connected to the first-stage optical circulator 104-1 and then reflected by the optical fiber grating 121-2 connected to the second-stage optical circulator 104-2, so that the optical signal is subjected to dispersion compensation in the aforementioned steps. After the optical signals of the respective wavelengths are then separated by an optical demultiplexer 142 in accordance with the wavelengths, the optical signals are converted into electric signals by light detectors 103-1, 103-2 and 103-3 respectively. Incidentally, the optical circulators 104-1 and 104-2 may be replaced by one multiport optical circulator or a plurality of multi-port optical circulators. Further, when this embodiment is applied to an optical repeater, the optical demultiplexer 142 and the light receiver 103 are removed, and an optical amplifier, or the like, may be added as occasion demands.

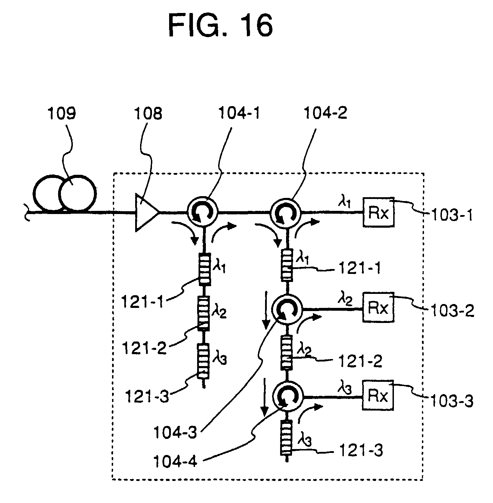

Fig. 16 shows an eleventh embodiment of the present invention and shows a modified form of the previous embodiment. In this embodiment, the optical fiber grating portion in the first stage is the same as in the previous embodiment, but the optical fiber grating portion in the second stage is used in common to dispersion compensation and optical demultiplexing, so that the optical demultiplexer becomes unnecessary. Configuration in which the number of stages or wavelengths is increased can be achieved easily.

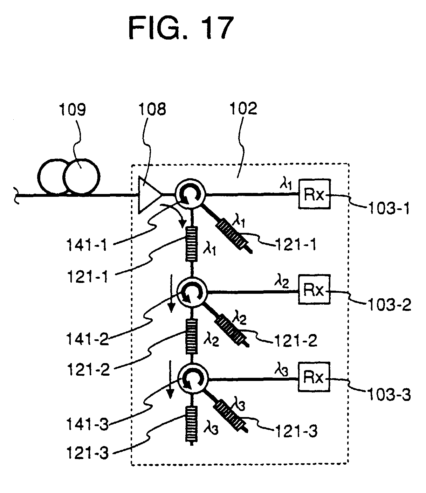

Fig. 17 shows a twelfth embodiment of the present invention and shows a further modified form of the previous embodiment. In this embodiment, a number of multi-port circulators corresponding to the number of wavelengths to be transmitted are series-connected to thereby achieve both wavelength demultiplexing and multistage connection of optical fiber gratings. Two optical fiber gratings 121-1 (reflection center wavelength $\lambda 1$) are connected to an optical circulator 141-1 in the first stage. The optical signal of wavelength $\lambda 1$ is reflected by the two optical fiber gratings 121-1 and received by a light receptor 103-1. The residual optical signals ($\lambda 2$ and $\lambda 3$) are made to pass through the optical fiber gratings 121-1, subjected to dispersion compensation by optical fiber gratings 121-2 and 121-3, and then received by light detectors 103-1 and 103-2 respectively. The aforementioned three embodiments are typical examples of allowable combinations, and the three embodiments may be used in combination.

According to the present invention, a wavelength stabilizing device is disposed in a transmitter to stabilize the transmission wavelength. Accordingly, there arise an effect that a narrow-band dispersion compensation device such as an optical fiber grating, or the like, can be disposed in a receiver or in an optical repeater. Accordingly, waveform distortion caused by a self-phase modulating (SPM) effect generated in an optical fiber transmission line can be compensated. Furthermore, a narrow-band dispersion compensation device can be disposed in the reception side even in low-power or short-distance transmission in which the self-phase modulating effect does not occur. Accordingly, there arise effects as follows: no receiving optical filter is required; the loss of light in the transmission side can be reduced; the distortion of the waveform of an optical signal outputted from the transmitter is reduced; flexibility is obtained in the configuration of the transmission system; and so on.

Further, when dispersion compensation characteristic is given to the transmission-side wavelength stabilizing device or a dispersion compensation device is disposed in the transmitter, only the frequency chirping of the transmission light source can be compensated. There arises an advantage that the self-phase modulating effect and the frequency chirping of the transmission light source can be compensated more effectively. In the latter case, there arises an advantage that the configuration is particularly simplified. Particularly in optical transmission at a speed not larger than 10 Gbit/s, the effect of dispersion compensation arises in the transmission side when the quantity of dispersion of not smaller than 50 ps/nm as an absolute value is given.

Particularly in the case where an optical fiber grating is used as the wavelength stabilizing device, there arise effects as follows: both dispersion compensation and wavelength stabilization can be performed simultaneously in the transmission side; and the wavelength stabilizing device can serve also as an optical fiber grating for dispersion compensation in the receiving side or the wavelength in the transmission side can be made to coincide with the center wavelength of a receiving-aide optical fiber grating easily.

Further, when the wavelength band of the transmission-side wavelength standard device is made to be narrower than that in the reception-side, accuracy in the transmission-side wavelength is improved and, accordingly, the change of the transmission wavelength and the change of the center wavelength of the dispersion compensation device disposed in the repeaters or in the receiving side can be absorbed. Assuming now that, for example, the wavelength band in the transmission-side is set to be 0.2 nm narrower than that in the receiving side, the transmission light can be kept accordant with the wavelength band of the receiving-side optical fiber grating to bring an effect of widening the service temperature range even in the case where both the temperature of the transmitter and the temperature of the receiver change within a width of $0.2/2/0.01=10°C$ because the temperature dependency of the center wavelength of the optical fiber grating is about 0.01 nm/°C. Further, when temperature stabilization is applied to either the transmission-side optical fiber grating or the receiving-side optical fiber grating, there arises an effect that the operating temperature range is widened to twice ideally. When temperature stabilization is applied to the two optical fiber gratings, there arises an effect that the operating temperature range is improved more greatly.

Further, also in transmission at a long distance not shorter than the order of hundreds of kilometers, multi-wavelength transmission, or the like, the allowable band may be limited to a value not larger than the order of nanometers by the gain difference between optical amplifiers, the dispersion value difference caused by the wavelength, or the like, even in the case where a wide-band device such as dispersion compensation fiber, or the like, is used. When the present invention is applied to such a case, there arises an effect that the transmission distance can be elongated. Particularly in the case where multi-wavelength transmission is performed, the respective transmission wavelengths are stabilized. Accordingly, there arise effects as follows: the interval between transmission wavelengths can be reduced; the number of wavelengths can be increased; and so on. Further, because the interval between transmission wavelengths can be reduced, the quantity of deterioration of the waveform for each wavelength, the gain difference between the wavelengths in the light amplifier, and so on, can be reduced. Furthermore, because the quantity of dispersion compensation is equalized, there arises an effect that design/maintenance of the transmission system is performed easily.

Further, when an optical fiber grating is used as the dispersion compensation device for application of the invention to multi-wavelength transmission, there arises an effect that an optical demultiplexer can be constituted simultaneously. Further, because optical fiber gratings different in center wavelength can be series-connected particularly in the transmission side or in the optical repeater, there arises an effect that the configuration is simplified. There arises a further advantage that the quantities of dispersion in the respective optical fiber gratings can be set independently. Further, also in the case where the number of wavelengths in an existing transmission system is increased, optical fiber gratings corresponding to new wavelengths can be connected through optical connectors, or the like. Accordingly, there arises an effect that extension/maintenance can be made easily.

Further, when optical fiber gratings having identical center wavelengths are used so as to be connected multistageously, there arises an effect that the wavelength band can be widened. Further, when a multi-port type optical circulator is used in this case, the configuration can be simplified. In addition, this configuration can be applied to a multi-wavelength system.

INDUSTRIAL APPLICABILITY

According to the present invention, a wavelength stabilizing device is disposed in a transmitter to stabilize the transmission wavelength. Accordingly, there arise an effect that a narrow-band dispersion compensation device such as an optical fiber grating, or the like, can be disposed in a receiver or in a repeater. Accordingly, waveform distortion caused by a self-phase modulating (SPM) effect generated in an optical fiber transmission line can be compensated. Furthermore, a narrow-band dispersion compensation device can be disposed in the receiving side even in low-power or short-distance transmission in which the self-phase modulating effect does not occur. Accordingly, there arise effects as follows: no receiving optical filter is required; the loss of light in the transmission side can be reduced; the distortion of the waveform of an optical signal outputted from the transmitter is reduced; flexibility is obtained in the configuration of the transmission system; and so on. According to the present invention, when configuration is employed so that, for example, a wavelength stabilizing device is disposed in a transmitter, the stabilization of the transmission wavelength is performed to make industrial applicability very large.

**Claims**

1. An optical transmission equipment comprising a light transmitter, and a light receiver, whereby information transmission is performed from said light transmitter to said light receiver through said optical fiber transmission line or information transmission is performed from said light transmitter to said light receiver through said optical fiber transmission line and at least one optical repeater using optical amplifiers, characterized in that a light wavelength standard device is disposed in said light transmitter to make the transmission wavelength of said light transmitter coincident with said wavelength standard device, and a dispersion compensation device is disposed in said optical repeaters or in said light receiver.

2. An optical transmission equipment according to Claim 1, characterized in that a dispersion compensation device is disposed in said light transmitter or dispersing characteristic is given to said light wavelength standard device to thereby perform dispersion compensation both in said light transmitter and in said light receiver.

3. An optical transmission equipment according to Claim 2, characterized in that the absolute value of the dispersing characteristic in the transmission wavelength of said light wavelength standard device disposed in said light transmitter is made to be not smaller than 50 ps/nm.

4. An optical transmission equipment according to any one of Claims 1, 2 and 3, characterized in that an optical fiber grating is used as said light wavelength standard device disposed in said light transmitter.

5. An optical transmission equipment according to any one of Claims 1, 2, 3 and 4, characterized in that an optical fiber grating is used as said dispersion compensation device disposed in said light receiver or in said light relay.

6. An optical transmission equipment according to any one of Claims 1, 2, 3 and 4, characterized in that distributed compensation fiber is used as said distributed compensation device disposed in said light receiver or in said light relay.

7. An optical transmission equipment according to any one of Claims 1, 2, 3, 4 and 5, characterized in that a transmission wavelength in all a temperature range of use of said optical transmission system is contained in the wavelength band of said dispersion compensation device disposed in said light receiver or in said light relay.

8. An optical transmission equipment according to any one of Claims 1 through 5 and Claim 7, characterized in that the wavelength band of said distributed compensation device disposed in said light receiver or in said light relay is set to be not smaller than a half of the sum of (the quantity of the change of the wavelength of the transmission light) and (the quantity of the change of the center wavelength of said dispersion compensation device).

9. An optical transmission equipment according to Claim 5, characterized in that the wavelength band of said optical fiber grating disposed in said light receiver or in said optical repeaters is set to be 0.2 nm or more larger than the wavelength bandwidth of said wavelength standard device in the transmission side.

10. An optical transmission equipment according to any one of Claims 1 through 9, characterized in that temperature stabilization is applied to either one of or both of said light wavelength standard device disposed in said light transmitter and said dispersion compensation device disposed in said light receiver or in said light relay.

11. An optical transmission equipment according to any one of Claims 1 through 10, which is a multi-wavelength transmission system in which a plurality of transmission light sources different in wavelength are disposed in said light transmitter and a plurality of light receptors corresponding to the transmission wavelengths are disposed in said light receiver, characterized in that a plurality of light wavelength standard devices at least corresponding to the transmission wavelengths are disposed in said light transmitter, and at least one dispersion compensation device is disposed in said light receiver.

12. An optical transmission system and equipment comprising a light transmitter, and a light receiver, whereby information transmission is performed from said light transmitter to said light receiver through optical fiber transmission line or information transmission is performed from said light transmitter to said light receiver through optical fiber transmission line and optical repeaters using optical amplifiers, characterized in that a plurality of optical fiber gratings having identical center wavelengths are used so as to be connected multistageously in any one of said light transmitter, said light receiver and said optical repeaters.

13. An optical transmission equipment according to Claim 12, characterized in that a plurality of transmission light sources different in wavelength are disposed in said light transmitter and a plurality of light receptors corresponding to the transmission wavelengths are disposed in said light receiver for performing multi-wavelength transmission.

14. An optical transmission equipment according to any one of Claims 4 through 11, characterized in that a plurality of optical fiber gratings having identical center wavelengths are used so as to be connected multistageously in said light receiver or in said optical repeaters.

# FIG. 1

# FIG. 2

# FIG. 3

(1) REFLECTION FACTOR OF FIBER GRATING 120
   (SERVICE CENTER TEMPERATURE)

$\Delta \lambda_t$

WAVELENGTH

$\lambda_0$

(2) REFLECTION FACTOR OF FIBER GRATING 121
   (SERVICE CENTER TEMPERATURE)

$\Delta \lambda_r$

WAVELENGTH

$\lambda_0$

# FIG. 4

(1) REFLECTION FACTOR OF FIBER GRATING 120
(MINIMUN TEMPERATURE)

(2) REFLECTION FACTOR OF FIBER GRATING 121
(MAXIMUM TEMPERATURE)

# FIG. 5

# FIG. 6

# FIG. 7

# FIG. 8

# FIG. 9

(a) REFLECTION FACTOR OF TRANSMISSION-SIDE
    OPTICAL FIBER GRATINGS 120-1 AND 120-2

(b) REFLECTION FACTOR OF RECEIVING-SIDE
    OPTICAL FIBER GRATING 121

# FIG. 10

# FIG. 11

(a) REFLECTION FACTOR OF TRANSMISSION-SIDE
   OPTICAL FIBER GRATINGS 120-1 AND 120-2

WAVELENGTH

(b) REFLECTION FACTOR OF RECEIVING-SIDE
   OPTICAL FIBER GRATINGS 121-1 AND 121-2

WAVELENGTH

# FIG. 12

# FIG. 13

# FIG. 14

# FIG. 15

# FIG. 16

# FIG. 17

## INTERNATIONAL SEARCH REPORT

| International application No. |
| --- |
| PCT/JP96/00622 |

**A. CLASSIFICATION OF SUBJECT MATTER**

Int. $Cl^6$ H04B10/18

According to International Patent Classification (IPC) or to both national classification and IPC

**B. FIELDS SEARCHED**

Minimum documentation searched (classification system followed by classification symbols)

Int. $Cl^6$ H04B10/00-10/28

Documentation searched other than minimum documentation to the extent that such documents are included in the fields searched

| | |
| --- | --- |
| Jitsuyo Shinan Koho | 1926 – 1996 |
| Kokai Jitsuyo Shinan Koho | 1971 – 1996 |
| Toroku Jitsuyo Shinan Koho | 1994 – 1996 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP, 7-283786, A (AT & T Corp.), October 27, 1995 (27. 10. 95) & US, 5430817, A & EP, 675611, A2, A3 & CA, 2141899, A & TW, 263631, A | 1 – 14 |
| Y | JP, 7-336324, A (Nippon Telegraph & Telephone Corp.), December 22, 1995 (22. 12. 95)(Family: none) | 1 – 14 |

☐ Further documents are listed in the continuation of Box C.  ☐ See patent family annex.

| | | |
| --- | --- | --- |
| * | Special categories of cited documents: | |
| "A" | document defining the general state of the art which is not considered to be of particular relevance | |
| "E" | earlier document but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
| --- | --- |
| June 6, 1996 (06. 06. 96) | June 18, 1996 (18. 06. 96) |

| Name and mailing address of the ISA/ | Authorized officer |
| --- | --- |
| Japanese Patent Office | |
| Facsimile No. | Telephone No. |

Form PCT/ISA/210 (second sheet) (July 1992)

29